# EUROPEAN PATENT APPLICATION

(11) **EP 3 647 718 A1**
(43) Date of publication of application: **06.05.2020**
(21) Application number: 19201485.0
(22) Date of filing: 04.10.2019
(51) Int. Cl.: G01B 21/16, G01B 5/00, G01M 13/026, G01M 17/013, B23Q 3/06, B23Q 17/22

(54) **WHEEL BRAKE SPACE DETECTING DEVICE**

(30) Priority: 02.11.2018 CN 201811298022
(71) Applicant: Citic Dicastal Co., Ltd., 066011 Quinhuangdao, Heibei (CN)
(72) Inventor: LIU, Weidong, Qinhuangdao, Hebei 066011 (CN); MA, Xiaoying, Qinhuangdao, Hebei 066011 (CN)
(74) Representative: Gerauer, Marc Philippé

(57) **Abstract**

A device for measuring a wheel brake space comprises a wheel supporting part and a probe supporting and moving part. The wheel supporting part comprises a synchronous cam. The probe holder comprises a sliding fame, a linear guide rail and a guide sliding seat. The probe is mounted on the sliding frame, the movement of the sliding frame being controlled by means of a motor and a ball-screw mechanism. The present invention can meet the requirements of precise detection of the wheel brake space, has the characteristics of simple structure, convenient manufacture, stable performance, high positioning precision, simple operation and the like, and therefore is very suitable for automatic batch production.

## Description

### Field of the Invention

The present invention relates to a space detecting device, specifically to a device for automatically detecting a wheel brake space with high precision after machining of a wheel.

### Background of the Invention

The wheel is an exterior part of a vehicle and is one of important safety parts. The brake system of the wheel is mounted in an inner wheel rim, that is, in the brake space of the wheel. Therefore, the brake space of the wheel is an important parameter affecting the assembly of the wheel. In a wheel manufacturer, whether the brake space is qualified is usually detected by a detection plate matching the brake space of the wheel. Such detection methods have the problems of low efficiency and poor detection effect, and cannot meet the needs of automated production.

### Summary of the Invention

The objective of the present invention is to provide a wheel brake space detecting device.

In order to achieve the above objective, the technical solution of the present invention is: a wheel brake space detecting device, comprising a frame 1, a servo motor A 2, a connecting shaft 3, a pedestal 4, a rotating shaft 5, a rotary cylinder 6, a bearing A 7, a bearing end cap A 8, a base 9, a bearing B 10, a bearing end cap B 11, a shaft 12, a shaft sleeve 13, contacts 14, a spring 15, linear bearings 16, a synchronous cam 17, a probe 18, a probe holder 19, a sliding frame A 20, a lead screw nut A 21, a guide rail sliding seat A 22, a linear guide rail A 23, a ball screw A 24, a servo motor B 25, a suspension 26, a linear guide rail B 27, a guide rail sliding seat B 28, a lead screw nut B 29, a ball screw B 30, a servo motor C 31, and a sliding frame B 32.

The servo motor A 2 and the pedestal 4 are mounted on the frame 1; the rotating shaft 5 is connected to an output shaft of the servo motor A 2 through the connecting shaft 3; the rotary cylinder 6, the shaft sleeve 13 and the base 9 are mounted on the rotating shaft 5; the bearing end cap B 11 encloses the bearing B 10 and the shaft 12 in the base 9, and two ends of the shaft 12 are respectively connected with an output shaft of the rotary cylinder 6 and the synchronous cam 17; the three or more linear bearings 16 are mounted on the side wall of the shaft sleeve 13 in a uniformly distributed way; the side wall of the synchronous cam 17 has three or more uniform-distributed cambered surfaces; the outer ends of the three or more contacts 14 pass through the spring 15 and the linear bearings 16, and the inner ends are respectively connected with the same amount of corresponding cambered surfaces of the high-precision synchronous cam 17; two ends of the spring 15 are respectively in contact with the linear bearings 16 and the shaft end surfaces of the contacts 14; the spring 15 always has elasticity, so that the inner ends of the contacts 14 always compress the synchronous cam 17; and the rotating shaft 5 is mounted on the pedestal 4 through the bearing A 7 and the bearing end cap A 8.

In a preferred aspect of the wheel brake space detecting device, the servo motor A 2, through the bearing A 7, drives the rotating shaft 5 to rotate with high precision.

In a preferred aspect of the wheel brake space detecting device, the rotary cylinder 6, through the bearing B 10 and the shaft 12, can drive the synchronous cam 17 to rotate; the cambered surfaces uniformly distributed on the side wall of the synchronous cam 17 push the series of contacts 14 to move synchronously and radially outward, the diameter of the pitch circle formed on the outer side of the series of contacts 14 increases, and the contacts 14 can be fixed at specific positions.

In a preferred aspect of the wheel brake space detecting device, during resetting of the rotary cylinder 6, the spring 15 presses the shaft end surfaces of the contacts 14, so that the inner ends of the contacts 14 are always in contact with the synchronous cam 17, and the series of contacts 14 move synchronously and radially inward.

The servo motor B 25, the ball screw A 24 and the linear guide rail A 23 are mounted on the sliding frame B 32; the output shaft of the servo motor B 25 is connected to the ball screw A 24; the sliding frame A 20 is connected with the linear guide rail A 23 through the guide rail sliding seat A 22; the sliding frame A 20 is connected to the ball screw A 24 through the lead screw nut A 21, wherein the lead screw nut A 21 meshes with the ball screw A 24; and through meshing of the lead screw nut A 21 and the ball screw A 24, the number of revolutions and the steering of the servo motor B 25 is controlled, and the sliding frame A 20 can be controlled to move up and down along the linear guide rail A 23. The probe 18 is mounted on the sliding frame A 20 through the probe holder 19.

The servo motor C 31, the ball screw B 30 and the linear guide rail B 27 are mounted on the suspension 26; the output shaft of the servo motor C 31 is connected to the ball screw B 30; the sliding frame B 32 is connected to the linear guide rail B 27 through the guide rail sliding seat B 28; the sliding frame B 32 is connected to the ball screw B 30 through the lead screw nut B 29, wherein the lead screw nut B 29 meshes with the ball screw B 30; and through meshing of the lead screw nut B 29 and the ball screw B 30, the number of revolutions and the steering of the servo motor C 31 are controlled, and the sliding frame B 32 can be controlled to move horizontally along the linear guide rail B 27.

According to the requirements of brake space detection specified in the wheel product standards, a control system comprehensively controls the steering and the number of revolutions of the servo motor B 25 and the servo motor C 31 through a pre-written running program to control the probe 18 to move linearly along the wheel brake detection space.

In actual use, a wheel is transported directly above the device through a transport system, the series of contacts 14 extend into a center hole of the wheel, through the bearing B 10 and the shaft 12, the rotary cylinder 6 can drive the synchronous cam 17 to rotate, the cambered surfaces uniformly distributed on the side wall of the synchronous cam 17 push the series of contacts 14 to move synchronously and radially outward, the series of contacts 14 finally tighten the center hole of the wheel, the rotary cylinder 6 fixes the synchronous cam 17 and the series of contacts 14 in this state, and the positioning of the wheel is completed. According to the requirements of the wheel detection space, a wheel assembly space detecting program is pre-written, the control system of the device comprehensively controls the steering and the number of revolutions of the servo motor B 25 and the servo motor C 31 through the pre-input space detecting program to control the probe 18 to move linearly along the wheel assembly space, the probe 18 synchronously feeds back the distance information between the wheels to an analysis system of the device, and the analysis system compares the acquired information with the requirements of the wheel product standards, and determines whether the assembly space of the wheel is qualified. So far, the assembly space detection of the wheel is completed.

The present invention can meet the requirements of precise detection of the wheel brake space, has the characteristics of simple structure, convenient manufacture, stable performance, high positioning precision, simple operation and the like, and therefore is very suitable for automatic batch production.

### Brief Description of the Drawings

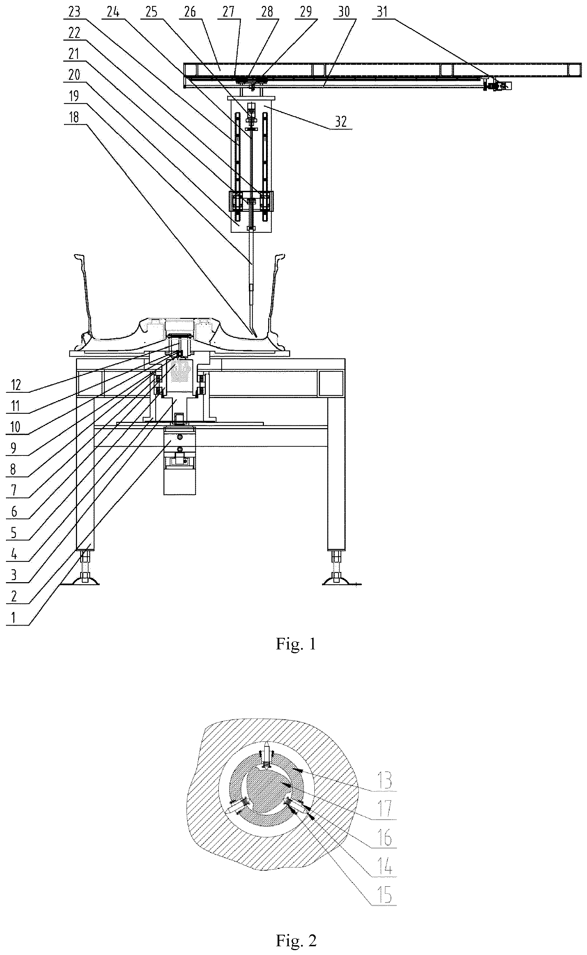

FIG. 1 is a structure diagram of a wheel brake space detecting device according to the present invention.
FIG. 2 is a schematic diagram of a positioning portion of the wheel brake space detecting device according to the present invention.

In which, 1-frame, 2-servo motor A, 3-connecting shaft, 4-pedestal, 5-rotating shaft, 6-rotary cylinder, 7-bearing A, 8-bearing end cap A, 9-base, 10-bearing B, 11-bearing end cap B, 12-shaft, 13-shaft sleeve, 14-contact, 15-spring, 16-linear bearing, 17-synchronous cam, 18-probe, 19-probe holder, 20-sliding frame A, 21-lead screw nut A, 22-guide rail sliding seat A, 23-linear guide rail A, 24-ball screw A, 25-servo motor B, 26-suspension, 27-linear guide rail B, 28-guide rail sliding seat B, 29-lead screw nut B, 30-ball screw B, 31-servo motor C, 32-sliding frame B.

### Detailed Description of Embodiments

The details and working conditions of the specific device according to the present invention are described in detail below in combination with the drawings.

The present invention relates to a wheel brake space detecting device, comprising a frame 1, a servo motor A 2, a connecting shaft 3, a pedestal 4, a rotating shaft 5, a rotary cylinder 6, a bearing A 7, a bearing end cap A 8, a base 9, a bearing B 10, a bearing end cap B 11, a shaft 12, a shaft sleeve 13, contacts 14, a spring 15, linear bearings 16, a synchronous cam 17, a probe 18, a probe holder 19, a sliding frame A 20, a lead screw nut A 21, a guide rail sliding seat A 22, a linear guide rail A 23, a ball screw A 24, a servo motor B 25, a suspension 26, a linear guide rail B 27, a guide rail sliding seat B 28, a lead screw nut B 29, a ball screw B 30, a servo motor C 31, and a sliding frame B 32.

The servo motor A 2 and the pedestal 4 are mounted on the frame 1; the rotating shaft 5 is connected to an output shaft of the servo motor A 2 through the connecting shaft 3; the rotary cylinder 6, the shaft sleeve 13 and the base 9 are mounted on the rotating shaft 5; the bearing end cap B 11 encloses the bearing B 10 and the shaft 12 in the base 9, and two ends of the shaft 12 are respectively connected with an output shaft of the rotary cylinder 6 and the synchronous cam 17; the three or more linear bearings 16 are mounted on the side wall of the shaft sleeve 13 in a uniformly distributed way; the side wall of the synchronous cam 17 has three or more uniform-distributed cambered surfaces; the outer ends of the three or more contacts 14 pass through the spring 15 and the linear bearings 16, and the inner ends are respectively connected with the same amount of corresponding cambered surfaces of the high-precision synchronous cam 17; two ends of the spring 15 are respectively in contact with the linear bearings 16 and the shaft end surfaces of the contacts 14; the spring 15 always has elasticity, so that the inner ends of the contacts 14 always compress the synchronous cam 17; and the rotating shaft 5 is mounted on the pedestal 4 through the bearing A 7 and the bearing end cap A 8.

In a preferred aspect of the wheel brake space detecting device, the servo motor A 2, through the bearing A 7, drives the rotating shaft 5 to rotate with high precision.

In a preferred aspect of the wheel brake space detecting device, the rotary cylinder 6, through the bearing B 10 and the shaft 12, can drive the synchronous cam 17 to rotate; the cambered surfaces uniformly distributed on the side wall of the synchronous cam 17 push the series of contacts 14 to move synchronously and radially outward, the diameter of the pitch circle formed on the outer side of the series of contacts 14 increases, and the contacts 14 can be fixed at specific positions.

In a preferred aspect of the wheel brake space detecting device, during resetting of the rotary cylinder 6, the spring 15 presses the shaft end surfaces of the contacts 14, so that the inner ends of the contacts 14 are always in contact with the synchronous cam 17, and the series of contacts 14 move synchronously and radially inward.

The servo motor B 25, the ball screw A 24 and the linear guide rail A 23 are mounted on the sliding frame B 32; the output shaft of the servo motor B 25 is connected to the ball screw A 24; the sliding frame A 20 is connected with the linear guide rail A 23 through the guide rail sliding seat A 22; the sliding frame A 20 is connected to the ball screw A 24 through the lead screw nut A 21, wherein the lead screw nut A 21 meshes with the ball screw A 24; and through meshing of the lead screw nut A 21 and the ball screw A 24, the number of revolutions and the steering of the servo motor B 25 is controlled, and the sliding frame A 20 can be controlled to move up and down along the linear guide rail A 23. The probe 18 is mounted on the sliding frame A 20 through the probe holder 19.

The servo motor C 31, the ball screw B 30 and the linear guide rail B 27 are mounted on the suspension 26; the output shaft of the servo motor C 31 is connected to the ball screw B 30; the sliding frame B 32 is connected to the linear guide rail B 27 through the guide rail sliding seat B 28; the sliding frame B 32 is connected to the ball screw B 30 through the lead screw nut B 29, wherein the lead screw nut B 29 meshes with the ball screw B 30; and through meshing of the lead screw nut B 29 and the ball screw B 30, the number of revolutions and the steering of the servo motor C 31 are controlled, and the sliding frame B 32 can be controlled to move horizontally along the linear guide rail B 27.

According to the requirements of brake space detection specified in the wheel product standards, a control system comprehensively controls the steering and the number of revolutions of the servo motor B 25 and the servo motor C 31 through a pre-written running program to control the probe 18 to move linearly along the wheel brake detection space.

In actual use, a wheel is transported directly above the device through a transport system, the series of contacts 14 extend into a center hole of the wheel, through the bearing B 10 and the shaft 12, the rotary cylinder 6 can drive the synchronous cam 17 to rotate, the cambered surfaces uniformly distributed on the side wall of the synchronous cam 17 push the series of contacts 14 to move synchronously and radially outward, the series of contacts 14 finally tighten the center hole of the wheel, the rotary cylinder 6 fixes the synchronous cam 17 and the series of contacts 14 in this state, and the positioning of the wheel is completed. According to the requirements of the wheel detection space, a wheel assembly space detecting program is pre-written, the control system of the device comprehensively controls the steering and the number of revolutions of the servo motor B 25 and the servo motor C 31 through the pre-input space detecting program to control the probe 18 to move linearly along the wheel assembly space, the probe 18 synchronously feeds back the distance information between the wheels to an analysis system of the device, and the analysis system compares the acquired information with the requirements of the wheel product standards, and determines whether the assembly space of the wheel is qualified. So far, the assembly space detection of the wheel is completed.

## Claims

1. A wheel brake space detecting device, comprising a frame 1, a servo motor A 2, a connecting shaft 3, a pedestal 4, a rotating shaft 5, a rotary cylinder 6, a bearing A 7, a bearing end cap A 8, a base 9, a bearing B 10, a bearing end cap B 11, a shaft 12, a shaft sleeve 13, contacts 14, a spring 15, linear bearings 16, a synchronous cam 17, a probe 18, a probe holder 19, a sliding frame A 20, a lead screw nut A 21, a guide rail sliding seat A 22, a linear guide rail A 23, a ball screw A 24, a servo motor B 25, a suspension 26, a linear guide rail B 27, a guide rail sliding seat B 28, a lead screw nut B 29, a ball screw B 30, a servo motor C 31, and a sliding frame B 32, wherein
the servo motor B 25, the ball screw A 24 and the linear guide rail A 23 are mounted on the sliding frame B 32; the output shaft of the servo motor B 25 is connected to the ball screw A 24; the sliding frame A 20 is connected with the linear guide rail A 23 through the guide rail sliding seat A 22; the sliding frame A 20 is connected to the ball screw A 24 through the lead screw nut A 21, wherein the lead screw nut A 21 meshes with the ball screw A 24; and through meshing of the lead screw nut A 21 and the ball screw A 24, the number of revolutions and the steering of the servo motor B 25 is controlled, and the sliding frame A 20 can be controlled to move up and down along the linear guide rail A 23, the probe 18 is mounted on the sliding frame A 20 through the probe holder 19.

2. The wheel brake space detecting device according to claim 1, wherein the servo motor A 2, through the bearing A 7, drives the rotating shaft 5 to rotate with high precision.

3. The wheel brake space detecting device according to claim 1, wherein the rotary cylinder 6, through the bearing B 10 and the shaft 12, can drive the synchronous cam 17 to rotate; the cambered surfaces uniformly distributed on the side wall of the synchronous cam 17 push the series of contacts 14 to move synchronously and radially outward, the diameter of the pitch circle formed on the outer side of the series of contacts 14 increases, and the contacts 14 can be fixed at specific positions.

4. The wheel brake space detecting device according to claim 1, wherein during resetting of the rotary cylinder 6, the spring 15 presses the shaft end surfaces of the contacts 14, so that the inner ends of the contacts 14 are always in contact with the synchronous cam 17, and the series of contacts 14 move synchronously and radially inward.
